# FASCICULE DE BREVET EUROPEEN

(11) **EP 1 588 609 B1**
(45) Date de publication et mention de la délivrance du brevet: **08.09.2010**
(21) Numéro de dépôt: 05101164.1
(22) Date de dépôt: 16.02.2005
(51) Int. Cl.: A01K 11/00

(54) **Procédé et set pour l'identification d'animaux**
Verfahren und Satz zum Identifizieren von Tieren
Method and set for the identification of animals

(30) Priorité: 27.02.2004 EP 04100791
(43) Date de publication de la demande: 26.10.2005
(73) Titulaire: IC Services, 1050 Bruxelles (BE)
(72) Inventeur: Parthoens, Marc, 4877, Ilne (BE)
(74) Mandataire: P&TS Patents & Technology Surveys SA

(56) Documents cités:
- EP-A- 1 300 081

## Description

La présente invention concerne un procédé et un set pour l'identification d'animaux. La présente invention concerne en particulier un procédé et un dispositif pour l'identification d'animaux de compagnie à l'aide de passeports.

De plus en plus de pays, en particulier parmi les pays européens, imposent ou recommandent que les animaux, notamment les animaux de compagnie, soient identifiés par exemple par un transpondeur et enregistrés dans une banque de données, permettant ainsi, le cas échéant, de retrouver le propriétaire ou le responsable de l'animal.

Deux normes ISO concernant les caractéristiques des transpondeurs à utiliser à cette fin ont par exemple été établies:
· ISO 11784, complétée par ISO 3166
· ISO 11785

Elles font pratiquement l'unanimité dans l'ensemble des pays européens.

D'autre part, un règlement européen qui sera en application dès le 3 juillet 2004 impose que les animaux de compagnie voyageant dans les pays membres ou en provenance de pays tiers doivent être accompagnés d'un passeport visant ainsi à assurer un niveau de sécurité suffisant en ce qui concerne les risques sanitaires.

Au niveau des Etats, la répression des fraudes ainsi que la traçabilité dans le domaine animal sont également à l'ordre du jour.

Un passeport pour animal est un document contenant les données d'identification de l'animal. Il peut également contenir ses données sanitaires, son suivi médical et d'autres informations le concernant.

Or les procédés d'identification de l'art antérieur tels que par exemple celui décrit dans le règlement européen cité ne permettent pas d'être sûr que le passeport présenté pour un animal corresponde effectivement à cet animal. Une solution adoptée par ces procédés est par exemple d'apposer dans le passeport un photo de l'animal à identifier. Or une telle solution présente plusieurs désavantages. Tout d'abord, elle est peu fiable car il est par exemple relativement aisé de changer la photo d'un passeport sans que la falsification ne soit visible. D'autre part, l'identification d'un individu à partir d'une photographie, déjà parfois difficile pour un être humain, est encore plus difficile pour un animal, et cette difficulté s'accroît d'autant plus que l'animal vieillit. La photographie doit en outre être de bonne qualité, ce qui est généralement relativement coûteux, et correctement cadrée, ce qui peut être difficile et long à réaliser avec des animaux.

Plus généralement, aucun document d'identification et/ou sanitaire de l'art antérieur ne permet de savoir si l'animal présenté correspond bien à celui indiqué sur le passeport.

Un but de l'invention est donc de proposer un procédé et un set pour l'identification d'animaux permettant de remédier aux désavantages des procédés et des dispositifs de l'art antérieur.

Un autre but de l'invention est de proposer un procédé et un set permettant d'assurer une identification simplifiée et fiable desanimaux.

Une solution pour éviter l'utilisation des passeports peu fiables de l'art antérieur serait de stocker toutes les informations nécessaires concernant l'animal dans le transpondeur qui lui est attaché. Une telle solution présente toutefois le désavantage que le transpondeur devrait alors disposer d'un espace mémoire suffisant pour stocker toutes ces données, impliquant un coût élevé et une taille relativement importante du transpondeur. De plus, les données ne pourraient être lues à tout moment, puisque leur accès nécessiterait obligatoirement l'utilisation d'un lecteur adapté.

Un passeport ou tout autre document d'identité imprimé reste ainsi utile pour une vérification rapide, par exemple, desdonnées concernant l'animal, la lecture du transpondeur étant par exemple effectuée uniquement en casde doute concernant l'authenticité de ces données.

Les buts de l'invention sont ainsi atteints par un procédé et par un set d'identification comprenant les caractéristiques des revendications indépendantes correspondantes, des variantes avantageuses étant en outre données par les revendications dépendantes.

Ces buts sont atteints en particulier par un procédé pour l'identification d'un identifié comprenant la fixation audit identifié d'un premier transpondeur comprenant un premier identifiant et le marquage d'un document imprimé d'identification de l'identifié à l'aide d'un deuxième transpondeur comprenant un deuxième identificateur lié de manière univoque audit premier identificateur et par un set pour l'identification d'un identifié comprenant un premier transpondeur codé avec un premier identificateur et un document imprimé d'identification de l'identifié marqué par un deuxième transpondeur comprenant un deuxième identificateur lié audit premier identificateur de manière univoque. Les deux transpondeur comprenant des identificateurs liés entre eux de manière univoque et de préférence infalsifiable, il est assuré que le document imprimé d'identification correspond bien à l'identifié.

L'invention se rapporte en particulier à un passeport pour animal identifié par un transpondeur anti-fraude contenant un identificateur pouvant être associé de manière univoque à un identificateur contenu dans le transpondeur d'identification injecté dans l'animal, dans le but d'éviter que ce passeport ne soit présenté avec un animal auquel il ne se rapporte pas.

Selon une variante préférentielle de l'invention, le dispositif d'identification d'animaux comprend un passeport identifié par un transpondeur anti-fraude contenant par exemple le même numéro que le transpondeur d'identification injecté dans l'animal, ces deux transpondeurs pouvant de préférence être lus avec un même lecteur standard.

Selon cette variante, l'invention permet ainsi de vérifier que le passeport présenté correspond bien à l'animal pour lequel il contient les informationsen comparant lesdeux numéros, celui de l'animal et celui du passeport, et en vérifiant qu'ils sont identiques.

Selon cette variante, toute personne ou administration concernée par les animaux, telle que par exemple les autorités, les vétérinaires, les sociétés de protection des animaux, etc., est de préférence en mesure de réclamer le passeport pour l'animal contrôlé, de lire le transpondeur injecté dans l'animal, de lire le transpondeur contenu dans le passeport et de comparer les numéros qui, s'ils sont identiques, garantissent que le passeport présenté correspond bien à l'animal concerné. La lecture des deux transpondeurs s'effectue de préférence à l'aide du même lecteur de transpondeurs standard.

De cette façon, ce passeport permet à toute personne ou administration concernée par les animaux de détecter toute erreur ou tentative de fraude et de prendre les mesures nécessaires. Pour toute information complémentaire, cette personne ou administration peut de préférence contacter une banque de données dans laquelle est enregistré l'animal afin de vérifier que les données indiquées dans le passeport, par exemple l'identité du propriétaire ou du responsable de l'animal, sont bien à jour.

Un avantage de la solution de l'invention est qu'elle permet au besoin un accès facilité à des données ne figurant pas, par exemple pour des raisons de place et/ou de confidentialité, sur le document imprimé. Ces données complémentaires sont par exemple stockées dans les deux transpondeurs, dans un seul des deux transpondeurs s'ils sont de type différents et/ou dans une banque de données de préférence accessible à distance, dans un enregistrement associé par exemple de manière univoque à l'identificateur contenu dans au moins un deux transpondeurs.

Certaines données sensibles ou confidentielles, sont ainsi par exemple mémorisées uniquement dans le premier et/ou dans le deuxième transpondeur. Elles sont alors accessibles uniquement à l'aide d'un lecteur adapté, évitant ainsi qu'elles ne soient accédées facilement par une personne non autorisée. Des données confidentielles peuvent également être stockées dans la banque de données. Leur accès est alors de préférence protégé par un mot de passe. Ces données confidentielles incluent par exemple le groupe sanguin de l'animal, son dossier vétérinaire, etc.

Pour des raisonsde place, certaines données ne sont par exemple stockées que dans l'un des deux transpondeurs ou dans la banque de données, la quantité d'information étant par exemple trop grande pour qu'elle soit entièrement reproduite sur le document imprimé.

Selon l'invention, une partie au moins des données concernant l'animal et/ou son propriétaire ou responsable est enregistrée dans une banque de données, gérée par exemple par une administration étatique ou un organisme privé et rassemblant de préférence des données concernant tous les animaux identifiés dans une région ou dans un pays Pour des raisons de confidentialité et/ou de place, certaines informations ne sont alors de préférence enregistrées que dans cette banque de données.

La banque de données est de préférence une banque de données centrale regroupant des informations concernant tous les éléments identifiés selon l'invention dans une région ou un pays. Elle est par exemple implémenté sur un serveur informatique et gérée par une administration publique régionale ou nationale, ou par un organisme privé, par exemple mandaté par une administration publique. La banque de données est de préférence atteignable à distance de manière informatique, par exemple à travers une connexion Internet, téléphonique fixe ou mobile, etc., par exemple à l'aide d'un PC, d'un téléphone ou de tout autre terminal de communication, de sorte qu'au moins une partie des données qu'elle contient soit accessible par exemple lorsde contrôle de l'identité de l'élément identifié, par exemple de l'animal. Grâce à une telle connexion à distance, certaines données peuvent être envoyéesde manière électronique à la banque de données et y être inscrites directement, par exemple lors de l'identification initiale de l'animal par un vétérinaire.

Le premier transpondeur destiné à être fixé à l'identifié contient de préférence une quantité minimale d'information, de manière à ce que la taille de sa mémoire et la puissance nécessaire à sa lecture soit la plus petite possible, en particulier s'il doit être injecté sous la peau d'un animal. Il contiendra alors le premier identificateur et éventuellement certaines informations de base telles que le groupe sanguin et l'espèce de l'animal par exemple. La mémoire du premier transpondeur est de préférence de type OTP ou ROM, de sorte que les information inscrites ne puissent plus être modifiées. Dans le casde mémoires ROM, certaines informations propres à l'identifié et généralement immuables peuvent toutefois être ajoutées après la programmation initiale, ces informations étant par exemple les dates des vaccins de l'animal, etc.

Selon une première variante, le deuxième transpondeur utilise une technologie identique au premier et contient le deuxième identificateur et éventuellement au moinsune partie des informations supplémentaires contenues dans le premier transpondeur. Selon une autre variante, la taille de la mémoire du deuxième transpondeur est plus importante et contient plus d'informations que le premier. Sa mémoire est cependant toujours de préférence de type ROM ou OTP.

La banque de données reprend de préférence toutes les informations contenues dans tes transpondeurs et dans le document d'identification imprimé. Elle contient cependant en outre avantageusement les informations susceptibles d'être modifiées telles que par exemple les coordonnées du propriétaire ou du responsable de l'identifié, et/ou les informations volumineuses, par exemple le dossier vétérinaire de l'animal, etc.

Les premier et deuxième identificateurs sont liés de manière univoque. Selon une première variante, ces deux identificateurs sont identiques. Il s'agit alors par exemple d'un même code numérique d'identification unique par exemple attribué à l'identifié. Selon une autre variante, les identificateurs sont liés par une fonction de conversion mathématique et/ou par un même cryptage qui peut par exemple être décodé par le lecteur de transpondeur. Les données concernant l'identifié stockées dans la banque de données sont de préférence également associées à un identificateur lié de façon univoque au premier identificateur et/ou au second identificateur, de sorte que le lien entre ces donnéeset l'identifié puissent être fait de manière sure.

La banque de données contient de préférence les données concernant l'identifié et/ou son propriétaire ou responsables.

Un transpondeur est la traduction du terme anglais transponder, abréviation anglaise de TRANSmitter & resPONDER.

C'est un élément électronique qui permet de recevoir un signal spécifique et de transmettre automatiquement une réponse spécifique.

Il est généralement constitué d'un microchip qui contient l'information, d'un condensateur et d'une antenne.

Il peut être actif ou passif.

Dans le cadre de l'identification animale:
· le microchip contient par exemple un code à 15 chiffres (transpondeur ISO) ;
· les 3 éléments constitutifs sont par exemple enfermés dans un minuscule tube en verre biologiquement compatible et injectable dans l'animal;
· il est du type passif.

Dans le cadre de l'invention, le transpondeur permettant d'identifier le passeport répond de préférence aux critères suivants :
· les 3 éléments constitutifs sont réunis de telle façon qu'ils puissent être intégrés dans le passeport, par exemple collés ou insérés dans la couverture, sur une des pages ou à tout autre endroit du passeport sans qu'il soit possible de les retirer sans les rendre inutilisables et/ou laisser des traces de la manipulation sur le passeport lui-même ;
· il est de préférence du type OTP (One Time Programmable), technique ne permettant qu'une seule écriture du numéro sans possibilité de modification ultérieure, permettant ainsi une meilleure protection contre les falsifications ;
· afin d'assurer que le transpondeur utilisé pour identifier le passeport puisse être lu sans difficulté par un lecteur standard tel que par exemple celui décrit dans la norme ISO 11785 déjà citée, les caractéristiques techniques sont de préférence identiques aux caractéristiques techniques du transpondeur implanté dans l'animal, par exemple en ce qui concerne le bit animalier décrit dans la norme ISO 11784 déjà citée.

Selon cette variante préférentielle de l'invention, le passeport est identifié par un transpondeur offrant protection optimale contre les fraudes et contenant un identificateur pouvant être associé de manière univoque à l'identificateur du le transpondeur d'identification injecté dans l'animal, ces deux transpondeurs pouvant de préférence être lus avec le même lecteur standard.

L'identificateur du transpondeur identifiant le passeport est de préférence codé selon la technique OTP (One Time Programmable) ou toute autre technique ne permettant plusde modifier ce numéro une fois qu'il a été enregistré dans le transpondeur. Il est par exemple inscrit dans une mémoire ROM (Read-Only Memory) permettant par exemple l'ajout d'informations supplémentaires sans permettre leur effacement. Le moment auquel intervient la codification du transpondeur dépend du procédé d'identification initiale, le problème étant de s'assurer de manière simple et sure que les deux transpondeurs associés à l'animal et à son passeport soient effectivement codés avec des identificateurs liés entre eux de manière univoque.

Selon une variante de l'invention, le passeport est délivré après la première identification de l'animal.

Selon cette variante, la personne chargée de l'identification initiale de l'animal, par exemple un vétérinaire
· procède à l'identification de l'animal par l'injection d'un transpondeur comprenant un identificateur, par exemple un code d'identification unique,
· remplit une fiche d'identification, par exemple une fiche imprimée ou électronique, en y indiquant l'identificateur du transpondeur injecté dans l'animal et de préférence les caractéristiques du chien et les coordonnées de son propriétaire ou de son responsable,
· envoie de préférence ces informations à une banque de données centrale, une banque de données par exemple choisie ou imposée par une réglementation nationale.

A la réception de ces informations, le système de gestion de la banque de donnée
· enregistre manuellement et/ou automatiquement les données reçues,
· procède à l'écriture dansun transpondeur d'identification pour passeport, de préférence selon un procédé OTP ou tout autre procédé ne permettant plus la modification des inscriptions, d'un identificateur lié de manière univoque à l'identificateur indiqué sur la fiche d'identification reçue et contenu dans le transpondeur injecté dans l'animal, ces deux identificateurs étant par exemple un même code d'identification unique,
· émet un document d'identification imprimé, par exemple un passeport, sur lequel figure au moinsune partie des données enregistrées concernant l'animal et identifié par le transpondeur codé préalablement,
· envoie ce document d'identification au propriétaire ou au responsable de l'animal titulaire du passeport.

Selon une autre variante de l'invention, le document d'identification est délivré avant la première identification de l'animal.

Selon cette variante, l'entité responsable de l'émission des passeports, qui est de préférence également responsable du système de gestion de la banque de données, envoie de préférence les éléments suivants au vétérinaire ou à toute autre personne et/ou administration chargée de la première identification de l'animal :
· un premier transpondeur à injecter dans l'animal contenant un identificateur, par exemple un code numérique unique, enregistré par exemple par le producteur du transpondeur ;
· un passeport identifiable par un deuxième transpondeur contenant un identificateur lié de manière univoque à l'identificateur du premier transpondeur, par exemple le même code numérique, le deuxième transpondeur étant de préférence lié au passeport, par exemple intégré danssa couverture, collé sur une de ses pages, etc., de manière à ne pouvoir être enlevé sans être endommagé et/ou laisser des traces de la manipulation sur le passeport ;
· une fiche d'identification à remplir, par exemple une fiche papier ou électronique.

Le vétérinaire ou toute autre personne et/ou administration chargée de la première identification de l'animal
· procède à l'identification initiale de l'animal par l'injection du premier transpondeur reçu,
· remplit la fiche d'identification reçue avec l'identificateur du transpondeur injecté dans l'animal et de préférence avec quelques indications supplémentaires telles que par exemple les caractéristiques du chien et/ou les coordonnées de son propriétaire ou de son responsable,
· envoie ces informations à une banque de données centrale, une banque de données par exemple choisie ou imposée par une réglementation nationale.
· complète éventuellement le document d'identification imprimé, par exemple le passeport, et le remet de préférence au propriétaire ou au responsable de l'animal.

A la réception de la fiche d'identification, l'entité responsable du système de gestion de banque de donnée
· enregistre les données reçues,
· envoie optionnellement au propriétaire ou au responsable de l'animal titulaire du passeport une confirmation de l'enregistrement reprenant par exemple au moins une partie des don nées enregistrées ; cette confirmation est alors par exemple collée ou insérée dans le passeport.

Selon une variante de ce dernier procédé, la distribution du premier transpondeur destiné à être injecté dans l'animal et la distribution du document imprimé identifié par un deuxième transpondeur contenant un identificateur lié de manière univoque à l'identificateur du premier transpondeur se font par des canaux différents. Le vétérinaire ou toute autre personne et/ou administration chargée de la première identification de l'animal recevant ces éléments est alors de préférence en mesure de contrôler que les deux transpondeurs reçus sont bien encodés correctement avant de procéder à l'identification de l'animal.

Selon encore une autre variante de l'invention, lestranspondeurs destinésà identifier l'animal et le passeport sont distribués indépendamment du passeport lui-même. Selon cette variante, les trois éléments (passeport, transpondeur d'identification de l'animal, transpondeur d'identification du passeport) sont distribués par des canaux différents, le vétérinaire ou toute autre personne et/ou administration chargée de la première identification de l'animal rassemblant cestrois éléments lorsde l'identification de l'animal. Selon cette variante également, le vétérinaire ou toute autre personne et/ou administration chargée de la première identification de l'animal recevant ces éléments est alors de préférence en mesure de contrôler que les deux transpondeurs reçus sont bien encodés correctement avant de procéder à l'identification de l'animal et à l'émission du passeport. Cette variante présente l'avantage que le procédé de l'invention peut ainsi facilement être associé à tout procédé de distribution de passeport pour animaux de l'art antérieur sans nécessiter de modification de ces procédés.

Selon les variantes de la présente invention décrites ci-dessus, le dispositif d'identification de l'invention comprend un passeport pour animaux identifié de manière univoque et pratiquement infalsifiable par un transpondeur. L'homme du métier comprendra cependant que le principe de l'invention peut être appliqué à tout autre document d'identification, papier ou électronique, comprenant dans sa structure un transpondeur qui affiche lorsde sa lecture un numéro identique à celui contenu dans le transpondeur fixé ou greffé sur l'animal à identifier.

Le procédé de l'invention a été décrit ci-dessus dans le cadre de l'identification d'animaux, en particulier d'animaux domestiques. L'homme du métier comprendra cependant que l'invention peut être appliquée à l'identification d'autres entités, par exemple des objets tels que des oeuvres d'art, des logiciels informatiques, des supports de données, des pièces mécaniques, des pièces de viande, etc. D'une manière générale, le principe de l'invention peut être appliqué à l'identification de tout élément associé à un document d'identification imprimé, par exemple à passeport ou à un certificat d'authenticité.

Selon une variante de l'invention, un même document imprimé d'identification, par exemple un même passeport ou un même certificat d'authenticité est utilisé pour plusieurs identifiés, par exemple pour identifier tous les logiciels d'une même série avec un seul certificat imprimé. Chaque identifié comprend alors de préférence un transpondeur contenant un même identificateur.

L'invention se rapporte ainsi à un Procédé pour l'identification d'un identifié, comprenant la fixation audit identifié d'un premier transpondeur comprenant un premier identifiant et le marquage d'un document imprimé d'identification de l'identifié à l'aide d'un deuxième transpondeur comprenant un deuxième identificateur lié de manière univoque audit premier identificateur.

Selon une variante préférentielle de l'invention, l'identifié est un animal domestique, auquel le premier transpondeur est par exemple injecté sous la peau.

Selon une variante préférentielle de l'invention, le document imprimé d'identification est un passeport.

De préférence, le marquage du document imprimé d'identification est effectué de manière à ne pouvoir être modifié et/ou annulé sans altérer le dispositif d'identification et/ou le deuxième transpondeur.

Selon une procédure d'identification, la fixation du premier transpondeur à l'identifié est effectuée avant le marquage du dispositif d'identification à l'aide du deuxième transpondeur. Le deuxième transpondeur est alors de préférence codé avec son deuxième identificateur après la fixation, en fonction du premier identificateur compris dans le premier transpondeur.

Selon une autre procédure d'identification, le marquage du dispositif d'identification à l'aide du deuxième transpondeur est effectué avant la fixation du premier transpondeur à l'identifié. Le premier transpondeur est alorsde préférence codé avec son premier identificateur après le marquage, en fonction du deuxième identificateur compris dans le deuxième transpondeur.

Le premier identificateur et/ou le deuxième identificateur sont est de préférence enregistrés dans une banque de données comprenant en outre de préférence des informations concernant l'identifié et/ou son propriétaire ou responsable.

Le premier transpondeur et le deuxième transpondeur peuvent de préférence être lus par un même lecteur. Afin d'éviter toute fraude ou falsification, le premier transpondeur et/ou le deuxième transpondeur sont de préférence de type OTP ou ROM. Ils comprennent en outre de préférence des informations supplémentaires concernant l'identifié et/ou son propriétaire ou responsable.

La présente invention concerne également un set pour l'identification d'un identifié, comprenant un premier transpondeur codé avec un premier identificateur et un document imprimé d'identification de l'identifié marqué par un deuxième transpondeur comprenant un deuxième identificateur lié audit premier identificateur de manière univoque. Afin d'éviter toute fraude ou falsification, le premier transpondeur et/ou le deuxième transpondeur sont de préférence de type OTPou ROM. Le document imprimé d'identification est par exemple un passeport.

## Revendications

1. Procédé pour l'identification d'un identifié, comprenant la fixation audit identifié d'un premier transpondeur comprenant un premier identifiant et le marquage d'un document imprimé d'identification de l'identifié à l'aide d'un deuxième transpondeur comprenant un deuxième identificateur lié de manière univoque audit premier identificateur.

2. Procédé selon la revendication précédente, ledit identifié étant un animal.

3. Procédé selon la revendication précédente, ladite fixation comprenant l'injection dudit premier transpondeur sous la peau dudit animal.

4. Procédé selon l'une des revendications précédentes, ledit document imprimé d'identification étant un passeport.

5. Procédé selon l'une des revendications précédentes, ledit marquage étant effectué de manière à ne pouvoir être modifié et/ou annulé sans altérer ledit document imprimé d'identification et/ou ledit deuxième transpondeur.

6. Procédé selon l'une des revendications précédentes, ladite fixation dudit premier transpondeur audit identifié étant effectuée avant le marquage dudit document imprimé d'identification à l'aide dudit deuxième transpondeur.

7. Procédé selon la revendication précédente, ledit deuxième transpondeur étant codé avec ledit deuxième identificateur après ladite fixation, en fonction dudit premier identificateur.

8. Procédé selon l'une des revendications 1 à 5, le marquage dudit dispositif d'identification à l'aide dudit deuxième transpondeur étant effectué avant ladite fixation dudit premier transpondeur audit identifié.

9. Procédé selon la revendication précédente, ledit premier transpondeur étant codé avec ledit premier identificateur après ledit marquage, en fonction dudit deuxième identificateur.

10. Procédé selon l'une des revendications précédentes, ledit premier identificateur et/ou ledit deuxième identificateur étant enregistrés dans une banque de données, ladite banque de donnéescomprenant en outre desinformationsconcernant ledit identifié et/ou son propriétaire ou responsable.

11. Procédé selon l'une des revendications précédentes, ledit premier transpondeur et ledit deuxième transpondeur pouvant être lus par un même lecteur.

12. Procédé selon l'une des revendications précédentes, ledit premier transpondeur étant de type OTP.

13. Procédé selon l'une des revendications précédentes, ledit deuxième transpondeur étant de type OTP.

14. Procédé selon l'une des revendications précédentes, ledit premier transpondeur et/ou ledit second transpondeur comprenant en outre des informations concernant ledit identifié et/ou son propriétaire ou responsable.

15. Set pour l'identification d'un identifié, comprenant un premier transpondeur codé avec un premier identificateur et un document imprimé d'identification de l'identifié marqué par un deuxième transpondeur comprenant un deuxième identificateur lié audit premier identificateur de manière univoque.

16. Set selon la revendication précédente, ledit premier transpondeur et/ou ledit deuxième transpondeur étant de type OTP.

17. Set selon l'une des revendications 15 ou 16, ledit document imprimé d'identification étant un passeport.

## Claims

1. Method for identifying an identified, comprising the affixing to said identified of a first transponder comprising a first identifier and the marking of a printed identification document of the identified by means of a second transponder comprising a second identifier linked univocally to said first identifier.

2. Method according to the preceding claim, said identified being an animal.

3. Method according to the preceding claim, said affixing comprising the injection of said first transponder under the skin of said animal.

4. Method according to one of the preceding claims, said printed identification document being a passport.

5. Method according to one of the preceding claims, said marking being performed so that it cannot be modified and/or cancelled without the identification device and/or the second transponder being altered.

6. Method according to one of the preceding claims, said affixing of said first transponder to said identified occurring before said printed identification document is marked by means of said second transponder.

7. Method according to the preceding claim, said second transponder being encoded with said second identifier after said affixing, according to said first identifier.

8. Method according to one of the claims 1 to 5, the marking of said identification device by means of said second transponder occurring before said affixing of said first transponder to said identified.

9. Method according to the preceding claim, said first transponder being encoded with said first identifier after said marking, according to said second identifier.

10. Method according to one of the preceding claims, said first identifier and/or said second identifier being recorded in a database, said database further comprising information pertaining to said identified and/or its owner or person responsible for it.

11. Method according to one of the preceding claims, said first transponder and said second transponder being readable by a same reader.

12. Method according to one of the preceding claims, said first transponder being of the type OTP.

13. Method according to one of the preceding claims, said second transponder being of the type OTP.

14. Method according to one of the preceding claims, said first transponder and/or said second transponder further comprising information pertaining to said identified and/or its owner or person responsible for it.

15. Set for identifying an identifier comprising a first transponder encoded with a first identifier and a printed identification document of the identified marked by a second transponder comprising a second identifier linked univocally to said first identifier.

16. Set of the preceding claim, said first transponder and/or said second transponder being of the type OTP.

17. Set of claim 15 or 16, said printed identification document being a passport.

## Patentansprüche

1. Verfahren um ein Identifizierungselement zu identifizieren, umfassend das Befestigen an besagtes Identifizierungselement einen ersten Transponder umfassend ein erstes Identifizierungsmerkmal und das Markieren von einem gedruckten Identifikationsdokument des Identifizierungselements durch einen zweiten Transponder umfassend ein zweites Identifizierungsmerkmal, das eindeutig mit dem ersten Identifizierungsmerkmal verbunden ist.

2. Verfahren gemäss dem vorhergehenden Anspruch, wobei besagtes Identifikationselement ein Tier ist.

3. Verfahren gemäss einem der vorhergehenden Ansprüche, wobei das Befestigen eine Injektion von besagtem erstem Transponder unter die Haut des besagten Tiers umfasst.

4. Verfahren gemäss einem der vorhergehenden Ansprüche, wobei besagtes gedrucktes Identifikationsdokument ein Pass ist.

5. Verfahren gemäss einem der vorhergehenden Ansprüche, wobei besagtes Markieren so durchgeführt wird, dass es nicht modifiziert und/oder rückgängig gemacht und/oder der zweite Transponder verändert werden kann.

6. Verfahren gemäss einem der vorhergehenden Ansprüche, wobei besagtes Befestigen von besagtem erstem Transponder an das besagte Identifizierungselement geschieht, bevor besagtes gedrucktes Identifikationsdokument durch besagten zweiten Transponder markiert wird.

7. Verfahren gemäss dem vorhergehenden Anspruch, wobei besagter zweiter Transponder mit besagtem zweitem Identifizierungsmerkmal als Funktion des besagten ersten Identifikationselements nach dem Befestigen verschlüsselt wird.

8. Verfahren gemäss einem der Ansprüche 1 bis 5, wobei das Markieren der besagten Identifikationsvorrichtung durch besagten zweiten Transponder vor dem Befestigen von besagtem erstem Transponder an besagtes Identifikationsmerkmal geschieht.

9. Verfahren gemäss dem vorhergehenden Anspruch, wobei besagter erste Transponder nach der Markierung gemäss dem besagten zweiten Identifizierungsmerkmal mit besagtem erstem Identifikationsmerkmal verschlüsselt wird.

10. Verfahren gemäss einem der vorhergehenden Ansprüche, wobei besagtes erstes Identifizierungsmerkmal und/oder besagtes zweite Identifizierungsmerkmal in einer Datenbank aufgenommen sind, wobei besagte Datenbank weiter Informationen umfasst, die besagtes Identifizierungsmerkmal und/oder seinen Besitzer oder eine dafür verantwortliche Person betreffen.

11. Verfahren gemäss einem der vorhergehenden Ansprüche, wobei besagter erste Transponder und besagter zweite Transponder durch einen und denselben Leser lesbar sind.

12. Verfahren gemäss einem der vorhergehenden Ansprüche, wobei besagter erste Transponder von OTP Typ ist.

13. Verfahren gemäss einem der vorhergehenden Ansprüche, wobei besagter zweite Transponder von OTP Typ ist.

14. Verfahren gemäss einem der vorhergehenden Ansprüche, wobei besagter erste Transponder und/oder besagter zweite Transponder weiter Informationen umfassen, die besagtes Identifizierungsmerkmal und/oder seinen Besitzer oder eine dafür verantwortliche Person betreffen.

15. Satz, um ein Identifizierungselement zu identifizieren umfassend einen ersten Transponder, der mit einem ersten Identifizierungsmerkmal identifiziert wird, und ein gedrucktes Identifikationsdokument des Identifizierungsmerkmals, der durch einen zweiten Transponder markiert ist, umfassend ein zweites Identifizierungsmerkmal, das eindeutig mit dem ersten Identifizierungsmerkmal verbunden ist.

16. Satz gemäss dem vorhergehenden Anspruch, wobei besagter erster Transponder und/oder besagter zweiter Transponder von OTP-Typ sind.

17. Der Satz von Ansprüchen 15 oder 16, wobei besagtes gedrucktes Identifikationsdokument ein Pass ist.
